# EUROPEAN PATENT APPLICATION

(11) **EP 3 671 277 A1**
(43) Date of publication of application: **24.06.2020**
(21) Application number: 18215159.7
(22) Date of filing: 21.12.2018
(51) Int. Cl.: G01S 17/87

(54) **3D IMAGING APPARATUS AND METHOD**

(71) Applicant: Infineon Technologies AG, 85579 Neubiberg (DE)
(72) Inventor: BESHINSKI, Krum, 8010 Graz (AT); LASS, Martin, 85567 Grafing (DE)
(74) Representative: 2SPL Patentanwälte PartG mbB

(57) **Abstract**

The present disclosure relates to a 3D imaging apparatus comprising a first and a second Time-Of-Flight, ToF, camera. The first ToF camera pointing in a first direction has a first field of view relative to the first direction. The second ToF camera pointing in a second direction has a second field of view relative to the second direction. The second field of view overlaps the first field of view.

## Description

### Field

The present disclosure generally relates to 3-dimensional (3D) imaging and, more particularly, to concepts for providing wide fields of view (FoV) for 3D imaging.

### Background

A Time-of-Flight (ToF) camera delivers a point cloud with distance information in every pixel and can address various applications in industrial and automotive markets. Many of such applications are requesting an (ultra-) wide field of view (FoV) to sense a given area of interest. Today, the realization of such wide field of view cameras is limited by many tradeoffs between the field of view, lateral pixel resolution, frame rate, power efficiency, performance, size and cost. For example, homogeneous light transmission across wide horizontal fields of view above 120° requires a specific optical diffusor/lens design on top of an illumination source (e.g., vertical-cavity surface-emitting laser, VCSEL), which is reducing the performance, increasing the bill-of-material (BoM) cost and camera size.

A first use-case example of ToF cameras is 3-dimensional (3D) sensing of a car's interior. Here, a ToF camera may deliver a point cloud with distance information inside the car cabin for various monitoring purposes, such as, for example, driver monitoring, face recognition, occupant detection, body position detection, seatbelt detection, airbag control, gesture recognition, activity tracking, etc. To be able to fulfill all these tasks, a ToF camera with both, high framerate and very wide field-of-view is desired. To efficiently cover the entire cabin, at least driver and passenger, a ToF camera would typically require a horizontal field of view of at least 130°, whereby some applications even request horizontal fields of view of up to 160°. Additionally, for some use-cases, like gesture detection, a high pixel resolution is desired. A typical requirement for finger tracking is a 5mm pixel pitch, which for the average car size and distance, using the state of the art resolution image sensors available in the market, limits the achievable field of view to below 120°. Furthermore, a framerate of up to 50 fps is desired for real-time gesture tracking, making a thermal design of a wide field of view camera very challenging.

A second use-case example of ToF cameras is 3D sensing of short range car exterior. Here, a ToF camera may deliver a point cloud with distance information for close range objects around the vehicle (for example, around 5-10m). Possible applications are focused on advanced driver assistance systems (ADAS) and may cover the entire range of autonomous driving levels (level 0 to level 5). A ToF camera can be used as part of a sensor cocoon around a vehicle, primarily, but not exclusively for blind spot detection, park assistance and automated parking. Most of the use cases are facing the same limitations and tradeoffs to design an efficient, high performant and cost- and size optimized ToF camera and can benefit in different ways from increasing the resolution and the framerate.

Currently, the problem of wide field of view cameras is not completely solved. Partial solutions include using 2D cameras, high resolution 3D cameras or some combination between them. 2D cameras can cover ultra-wide field of view with sufficient resolution, but they do not provide real distance information. In this case the distance information may be derived entirely based on computer vision algorithms, with high computational loads and relatively low accuracy. This is suitable for all applications, especially gesture tracking and airbag control. Furthermore, 2D cameras are more sensitive to background light and data quality can be very poor in bright sunlight or cases where moving light/dark transitions occur (driving through a road with lots of trees on the sides, in and out of a tunnel etc.).

2D camera solutions with active infrared illumination have similar challenges and limitation for the wide field of view illumination design, like a single 3D camera. Conventional 3D cameras still do not offer enough resolution to fulfill ultra-wide field of view scenarios for all use cases (conventional 3D camera resolution is VGA (640x480 pixel)). As mentioned before, ultra-wide field of view is also a serious technical issue for active illumination elements required by 3D cameras. Typically, the illumination source is a VCSEL with a diffuser, but conventional diffusers are not working properly for field of view bigger than 120°. This requires the use of secondary optics which increases the system cost and complexity, without providing a complete solution.

Thus, an efficient solution for wide field of view 3D imaging is desired.

### Summary

This demand is met by apparatuses and methods in accordance with the independent claims. Further embodiments which may be beneficial under specific circumstances are addressed by the dependent claims.

According to a first aspect, the present disclosure provides an apparatus for 3D imaging. The 3D imaging apparatus comprises a first ToF camera pointing in a first direction and having a first field of view relative to the first direction. The apparatus further comprises a second ToF camera pointing in a second direction and having a second field of view relative to the second direction, the second field of view overlapping the first field of view. By providing overlapping fields of view of the first and the second ToF cameras, a combined wider field of view of the 3D imaging apparatus may be achieved. Further, a space monitored by the 3D imaging apparatus can be segmented into a first segment solely covered by the first ToF camera, a second segment solely covered by the second ToF camera, and an overlapping segment covered by both ToF cameras. The different segments can have different requirements towards accuracy, framerate and resolution.

In some example implementations, the first and the second ToF cameras may be conventional ToF cameras having respective conventional fields of view, which are each narrower (less wide) than the resulting combined wider field of view.

In some example implementations, for example related to automotive applications, the first and the second ToF cameras may be positioned such that the overlapping first and second fields of view in total cover at least 130°. In this way, an entire car cabin, at least driver and passenger, can be covered by the 3D imaging apparatus. Overlapping fields of view in the present context may be understood as partially overlapping fields of view in horizontal direction (azimuth) and/or vertical direction (elevation). For example, an overlapping area of the first and second field of view may be at most 50% of the first or second field of view.

The first direction may be a direction perpendicular to a surface of the first ToF camera's light sensitive pixel sensor array. Thus, the first direction may coincide with an optical axis of the first ToF camera. Likewise, the second direction may be a direction perpendicular to a surface of the second ToF camera's light sensitive pixel sensor array. Thus, the second direction may coincide with an optical axis of the second ToF camera.

In some example implementations, the first and the second direction span a horizontal plane. In this case, an increased horizontal field of view of the 3D imaging apparatus may be obtained. The skilled person having benefit from the present disclosure will appreciate, however, that also different geometrical setups of the first and the second ToF camera are possible, for example to obtain an increased vertical field of view of the 3D imaging apparatus.

In some example implementations, the first and the second direction may be pointing away from each other. This may be useful for a very wide combined field-of-view of the 3D imaging apparatus.

Alternatively, the first and the second direction may be pointing towards each other. This may be useful for applications where a large overlapping area of the first and the second field of view is desired. Additionally, further stereo effects may be achieved in such a setup of the first and the second ToF camera.

In some example implementations, the 3D imaging apparatus further comprises a control circuit which is configured to control image acquisition of the first and the second ToF camera in an interleaved manner. Operating the first and the second ToF camera alternatingly can avoid mutual interference and can provide an increased frame rate for an overlapping area of the first and second fields of view. In this regard, the first ToF camera may be configured to capture first image data at a first frame rate. The second ToF camera may be configured to capture second image data at a second frame rate. The skilled person having benefit from the present disclosure will appreciate that the first and the second frame rates may be identical or they may be different from each other. The 3D imaging apparatus may be configured to provide image data corresponding to an overlapping area of the first and second field of view at a frame rate which is larger than the first or the second frame rate. In some example implementations, the frame rate of the image data corresponding to an overlapping area of the first and second field of view may correspond to the sum of the first and the second frame rate.

In some example implementations, the 3D imaging apparatus further comprises a multiplexer which is configured to multiplex a first image data signal of the first ToF camera and a second image data signal of the second ToF camera. In this way, image data of both the first and the second ToF camera can be transferred to further signal processing stages via a common signal link.

In some example implementations, the 3D imaging apparatus may be configured to vary an overlapping area of the first and second field of view by varying the first and/or the second direction. This can be done by using adequate actuators, for example. Such actuators can be controlled by a human or even automatically based on certain scenarios detected by the ToF cameras. For example, certain scenarios may require an increased overlapping area (and higher frame rate) of the first and the second field of view compared to other scenarios.

According to a further aspect, the present disclosure provides a vehicle comprising a 3D imaging apparatus according to any one of the previous examples. This can address the use-case examples described above.

According to a further aspect, the present disclosure provides a 3D imaging method. The method includes capturing first image data with a first ToF camera pointing in a first direction and having a first field of view relative to the first direction, and capturing second image data with a second ToF camera pointing in a second direction and having a second field of view relative to the second direction. The second field of view overlaps the first field of view.

In some example implementations of the method, the first image data and the second image data are captured in an interleaved manner. As described above this may lead to a higher frame rate in the overlapping area of the first and second field of view.

In some example implementations, the method may further include multiplexing the first image data and the second image data. This may need less physical data links between different signal processing stages.

In some example implementations, the method may be used for sensing a vehicle's interior or exterior. Sensing a vehicles interior may be useful, for example, regarding monitoring purposes, such as driver monitoring, face recognition, occupant detection, body position detection, seatbelt detection, airbag control, gesture recognition, activity tracking. Sensing the vehicle's exterior or environment can be useful for tracking objects, such as other cars, pedestrians or cyclists being in a narrow surrounding (5 - 10 m) around the vehicle. With regard to an automotive implementation of the present disclosure, sensing the vehicle's exterior can be applied, for example, in a parking assistance system.

### Brief description of the Figures

Some examples of apparatuses and/or methods will be described in the following by way of example only, and with reference to the accompanying figures, in which
- Fig. 1a: illustrates a 3D imaging apparatus comprising a first and a second ToF camera pointing away from each other.
- Fig. 1b: illustrates a 3D imaging apparatus comprising a first and a second ToF camera pointing towards each other.
- Fig. 2: illustrates a 3D imaging apparatus comprising a first and a second ToF camera frontend, a multiplexer and an application processor.
- Fig. 3: illustrates an interleaved data stream between the ToF camera frontends and the application processor.
- Fig. 4: illustrates four different ToF camera frontends of single and double ToF camera setups.
- Fig. 5: shows a table comparing pixel pitches of single and double ToF camera set-ups.
- Fig. 6: shows a block diagram of a 3D imaging apparatus based on a double ToF camera setup.
- Fig. 7: shows a flow chart illustrating a method for 3D imaging.

### Detailed Description

Various examples will now be described more fully with reference to the accompanying drawings in which some examples are illustrated. In the figures, the thicknesses of lines, layers and/or regions may be exaggerated for clarity.

Accordingly, while further examples are capable of various modifications and alternative forms, some particular examples thereof are shown in the figures and will subsequently be described in detail. However, this detailed description does not limit further examples to the particular forms described. Further examples may cover all modifications, equivalents, and alternatives falling within the scope of the disclosure. Same or like numbers refer to like or similar elements throughout the description of the figures, which may be implemented identically or in modified form when compared to one another while providing for the same or a similar functionality.

It will be understood that when an element is referred to as being "connected" or "coupled" to another element, the elements may be directly connected or coupled or via one or more intervening elements. If two elements A and B are combined using an "or", this is to be understood to disclose all possible combinations, i.e. only A, only B as well as A and B, if not explicitly or implicitly defined otherwise. An alternative wording for the same combinations is "at least one of A and B" or "A and/or B". The same applies, mutatis mutandis, for combinations of more than two Elements.

The terminology used herein for the purpose of describing particular examples is not intended to be limiting for further examples. Whenever a singular form such as "a," "an" and "the" is used and using only a single element is neither explicitly or implicitly defined as being mandatory, further examples may also use plural elements to implement the same functionality. Likewise, when a functionality is subsequently described as being implemented using multiple elements, further examples may implement the same functionality using a single element or processing entity. It will be further understood that the terms "comprises," "comprising," "includes" and/or "including," when used, specify the presence of the stated features, integers, steps, operations, processes, acts, elements and/or components, but do not preclude the presence or addition of one or more other features, integers, steps, operations, processes, acts, elements, components and/or any group thereof.

Unless otherwise defined, all terms (including technical and scientific terms) are used herein in their ordinary meaning of the art to which the examples belong.

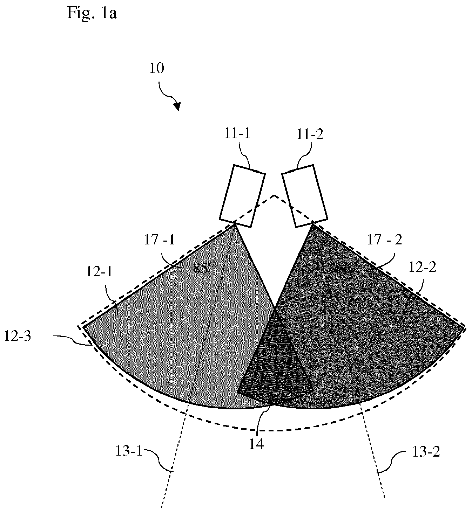

Above mentioned use-case examples (e.g. gesture recognition, ADAS, etc.) may require 3D imaging with a large FoV (for example, larger than 120°) and a high frame rate (for example, higher than 50 fps). An example of a 3D imaging apparatus, which can meet these requirements is schematically illustrated in **Fig. 1a****.**

3D imaging apparatus or 3D camera module 10 comprises a first ToF camera 11-1 and at least a second ToF camera 11-2. The first ToF camera 11-1 points in a first direction 13-1 while the second ToF camera 11-2 points in a different second direction 13-2. The first and second directions 13-1, 13-2 may be parallel or not. The first ToF camera 11-1 has a first FoV 12-1 relative to the first direction 13-1. The second ToF camera 11-2 has a second FoV 12-2 relative to the second direction 13-2. The ToF cameras 11-1 and 11-2 are positioned to cause an overlap between the first FoV 12-1 and the second FoV 12-2. Thus, the first FoV 12-1 and the second FoV 12-2 overlap in overlapping area 14. Also, a combined FoV 12-3 corresponding to the combination of the first and second FoVs 12-1, 12-2 covers a wider azimuthal angle than the first FoV 12-1 and than the second FoV 12-2. A space monitored by the 3D imaging apparatus 10 can be segmented into a first area solely covered by the first ToF camera 11-1, a second area solely covered by the second ToF camera 11-2, and the overlapping area 14 covered by both ToF cameras. The different areas can have different requirements towards accuracy, framerate and resolution.

The ToF cameras 11-1, 11-2 may be conventional ToF cameras, each comprising an illumination unit, optics, an image sensor, and driver electronics to control and synchronize the illumination unit and the image sensor. The camera directions 13-1 and 13-2 may correspond to an optical axis of a lens of the respective ToF camera. The directions 13-1 and 13-2 can also be perpendicular to respective image sensors (light sensitive pixel arrays) of the ToF cameras 11-1 and 11-2. In Fig. 1a, the first direction 13-1 is illustrated as symmetry axis of the first ToF camera's first FoV 12-1. Likewise, the second direction 13-1 is illustrated as symmetry axis of the second ToF camera's first FoV 12-2. The skilled person having benefit from the present disclosure will appreciate that this may be an idealization of the real world. The FoVs 12-1 and 12-2 can be modelled by pyramids, which have azimuthal and elevational opening angles. Without loss of generality, we will focus on the azimuthal width of the FoV in the following.

The ToF cameras 11-1 and 11-2 may be conventional ToF cameras with conventionally wide FoVs. The skilled person having benefit from the present disclosure will appreciate that a camera's FoV depends on different factors, such as its optics (e.g. lens) and/or optical diffusors, for example. According to embodiments of the present disclosure, the first FoV 12-1 and the second FoV 12-2 may each have an azimuthal width of less than 100° or even less than 90°.

Example implementations of apparatus 10 may aim particularly at use cases which require a large FoV (>120°) in horizontal/azimuthal direction. Without loss of generality, such use cases may be sensing a car's interior and/or exterior. Other scenarios are of course also conceivable. Hence, example implementations of the apparatus 10 may be focused on providing a wide FoV in the horizontal direction (horizontal FoV) obtained by combining the first FoV 12-1 and the second FoV 12-2.

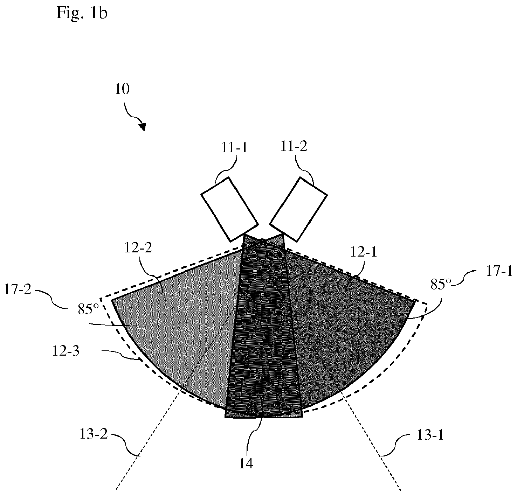

Due to the overlap of the first FoV 12-1 and the second FoV 12-2, the overlapping area 14 is captured by both the first ToF camera 11-1 and the second ToF camera 11-2. A size of the overlapping area 14 depends on the opening angle of the FoVs 12-1 and 12-2 and on the first direction 13-1 and the second direction 13-2. The overlapping area 14 may be in a range between 0° and at maximum 50% of the first or second FoV. For example, the overlapping area 14 may have an azimuthal width of 10° to 20°. In the example illustrated in Fig. 1a, the first ToF camera 11-1 and the second ToF camera 11-2 point away from each other, leading to smaller overlapping areas 14. However, the ToF cameras 11-1 and 11-2 can also point towards each other, such as illustrated in the example of **Fig. 1b****.**

In the example arrangement of Fig. 1b, the FoVs 12-1 and 12-2 point towards each other and intersect depending on a distance between the ToF cameras 11-1 and 11-2 closer or farther away from the ToF cameras 11-, 11-2. Therefore a positioning of the ToF cameras 11-1 and 11-2 can affect where the FoVs 12-1 and 12-2 intersect, which may also affect the size and a positioning of the overlapping area 14. A large distance between the ToF cameras 11-1 and 11-2 may be beneficial for some use cases, like for monitoring front seats and back seats of a car using the ToF cameras 11-1 and 11-2, which may be desired in an autonomously driving car where front seats and back seats may be turned towards each other. Requirements coming from such a use case can be met by the arrangement of ToF cameras 11-1 and 11-2 according to Fig. 1b. In Fig. 1b the overlapping area 14 may be chosen larger compared to the setup of Fig. 1a. The skilled person having benefit from the present disclosure will appreciate that the basic idea is the positioning of the two camera frontends in a way that their FoVs 12-1, 12-2 overlap. Different positions can be used and different use cases addressed, depending on the position of the camera system in a car. The cameras 11-, 11-2 can be looking away from each other (Fig. 1b) or towards each other (Fig. 1a). The exact geometrical configuration will depend on the position of the camera module 10 with respect to the monitored area and the need for bigger or smaller overlap area.

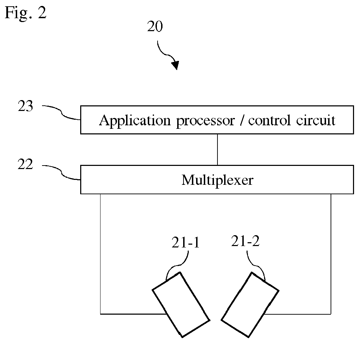

Another example 3D imaging apparatus 20 is illustrated in **Fig. 2****.**

Apparatus 20 comprises, in addition to a first and a second ToF camera (frontend) 21-1, 21-2, a multiplexer 22 and an application processor 23. For example, the application processor 23 can process image data from the ToF camera frontends 21-1, 21-2 in order to obtain image data of a first area solely captured by the first ToF camera frontend 21-1, a second area solely captured by the second ToF camera frontend 21-2, and of the overlapping area 14 captured by both ToF cameras. The application processor 23 can further comprise control circuitry which can control the ToF camera frontends 21-1 and 21-2 in an interleaved manner. When the first ToF camera frontend 21-1 and the second ToF camera frontend 21-2 operate interleaved, the first ToF camera frontend 21-1 and the second ToF camera frontend 21-2 capture image data (depth maps) alternatingly according to a time multiplex. The first ToF camera frontend 21-1 captures first image data during a first time interval and the second ToF camera frontend 21-2 captures second image data during a non-overlapping second time interval. Multiplexer 22 can multiplex the first and the second image data onto a common physical signal link to application signal processor 23.

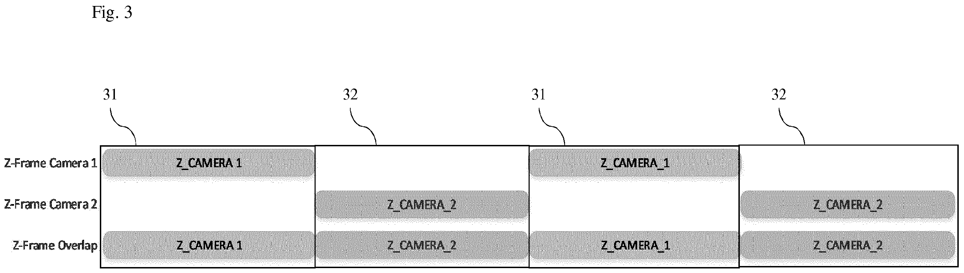

When the two ToF camera frontends 21-1, 21-2 work together in an interleaved mode, each delivering data from its respective field of view, this allows both ToF cameras 21-1, 21-2 to operate at relatively low framerate. This can directly translate to lower power consumption and respectively less generated heat, while the framerate in the overlapping area 14 is increased, e.g. doubled, which provides the ability to serve several use cases at the same time. **Fig. 3** describes the interleaved data stream of the two camera frontends 21-1, 21-2.

As can be seen in the example of Fig. 3, the first ToF camera frontend 21-1 generates first image data 31 in the first frame, the third frame, the fifth frame, and so on. The second ToF camera frontend 21-2 generates second image data 32 in the second frame, the fourth frame, the sixth frame, and so on. Here, both frame rates of the two ToF camera frontends 21-1, 21-2 are identical. Since both the first image data 31 and the second image data 32 also include image data (distance information) of the overlapping area 14, image data of the overlapping area 14 is available in every frame, hence with double frame rate compared to the individual ToF camera frontends 21-1, 21-2. In an example implementation which comprises conventional ToF cameras 21-1 and 21-2, the first and the second frame rate can be 40 Hz. Then, the overlapping area 14 may be captured with a frame rate of 80 Hz. Gesture recognition requires imaging a monitored area with a rate of at least 50 Hz, allowing individual frame rates of the ToF camera frontends 21-1, 21-2 as low as 25 Hz.

For purposes of gesture recognition, also a sufficient spatial resolution or pixel pitch is desired. The pixel pitch defines a lateral distance of two points of a scene, which are captured by two neighboring pixels of a light sensitive pixel array. The pixel pitch in horizontal direction may depend on the horizontal opening angle of the FoV of the ToF camera and a horizontal pixel resolution of the sensor. Further, the pixel pitch depends on the distance of the points from the ToF camera. In case of gesture tracking inside a car cabin, most of the gestures done by a driver or a passenger may happen in an average distance of 80 cm to the roof liner. For example, embodiments of the present disclosure may be used in a car cabin. Thus, the apparatus 10, 20 should provide a pixel pitch of less than 5 mm in a range of 80 cm from the apparatus 10, 20.

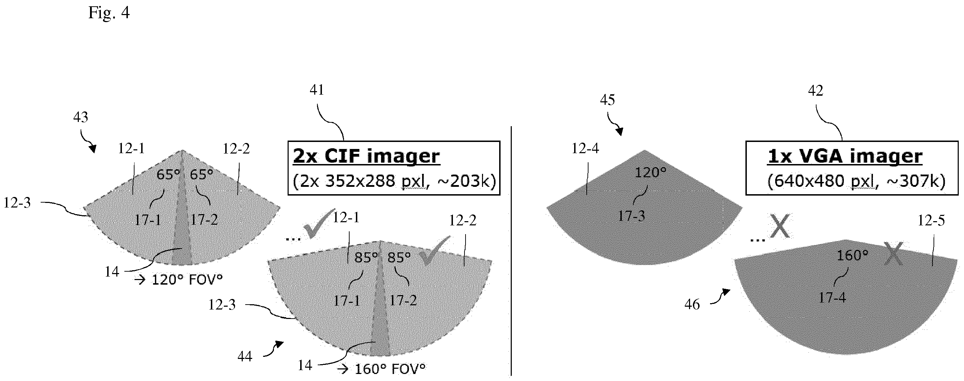

For single 3D cameras with optics providing (ultra-) wide horizontal FoVs (> 130°) the pixel pitch in horizontal direction (horizontal pixel pitch) typically exceeds the value of 5 mm. Embodiments of the present disclosure combining a first and a second ToF camera with overlapping narrower FoVs (for example, each up to 100° wide) may fulfill the mentioned requirements (horizontal pixel pitch < 5 mm) for gesture recognition, while an apparatus using a single ToF with (ultra-) wide horizontal FoV may not. To illustrate this, **Fig. 4** schematically shows four different ToF camera frontends.

The examples 43 and 44 each comprise a first and a second ToF camera frontend 11-1 and 11-2, each with a narrow FoV. The examples 45 and 46 each comprise single ToF camera with a wide FoV.

The first and the second ToF camera 11-1 and 11-2 illustrated in the example 43 each have a FoV 12-1, 12-2 with an azimuthal opening angle 17-1, 17-2 of 65°. The combined horizontal FoV 12-3 of the FoVs, 12-1 and 12-2, has an angle of 120°. The first and the second FoVs 12-1, 12-2 have an overlapping area 14 corresponding to an angle of 10°. The first and the second ToF camera 11-1, 11-2 illustrated in the example 44 each have a FoV 12-1, 12-2 with an azimuthal opening angle 17-1, 17-2 of 85°. The combined horizontal FoV 12-3 of the FoVs 12-1, 12-2 has an angle of 160°. The first and the second FoV, 12-1 and 12-2, have an overlapping area 14 corresponding to an angle of 10°.

The example 45 illustrates a single ToF camera frontend with a wide FoV 12-4 having an azimuthal opening angle 17-3 of 120°. The example 46 illustrates a single ToF camera frontend with an even wider FoV 12-5 having an azimuthal opening angle of 160°. However, the examples 45 and 46 may be difficult to implement since conventional diffusors may not provide a sufficient illumination of an area covered by the wide FoVs 12-4, 12-5. Additionally, there may be no available optics to capture the wide FoVs 12-4, 12-5.

While VGA (Video Graphics Array) imagers 42 with a pixel resolution of 640 x 480 may be necessary to capture depth maps in accordance with the wide FoVs 12-4, 12-5, a combination of ToF cameras 11-1 and 11-2 with narrow FoV according to the examples 43 and 44 may utilize CIF (Common Intermediate Format) imagers 41 with a smaller pixel resolution of 352 x 288. With regard to a horizontal pixel resolution, a single VGA imager can provide a smaller pixel pitch than a single CIF imager. However, if two ToF camera frontends, each equipped with a CIF imager, are combined according to the present disclosure, the resulting pixel pitch may be sufficiently small for many applications. Further, the number of pixels of two CIF imagers is less than the number of pixels of one VGA imager. Thus, the amount of image data captured by two CIF imagers 41 is less than an amount of data captured by one VGA imager 42.

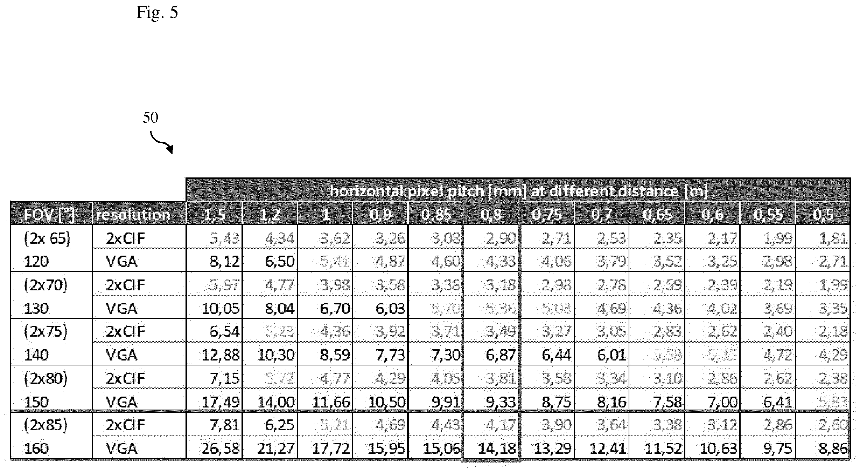

Table 50 of **Fig. 5** shows a comparison between pixel pitches for single camera setups according to the right side of Fig. 4 and double camera setups according to the left side of Fig. 4. Single camera setups with wide FoVs of 120°, 130°, 140°, 150°, and 160° are compared to double camera setup with FoVs of 2 x 65° (10° overlap), 2 x 70° (10° overlap), 2 x 75° (10° overlap), 2 x 80° (10° overlap), and 2 x 85° (10° overlap). As can be seen, single wide FoV camera setups have limitations in resolution compared to double camera setups according to the present disclosure, which achieve better pixel pitches for nearly every distance from 0.5 to 1.5 m. For example, a double camera setup with 120° combined FoV in accordance with the present disclosure can resolve 2.9 mm at 80 cm distance. What comes on top is that only 203kpixel (2x352x288) need to be processed at better resolution. This can lead to less calculation effort at the application processor 23. Further, only narrow FOV lenses are required, leading to smaller diameters, smaller lens height, and better performance at edges compared to wide FoV lenses. A double camera setup with overlapping FoV in accordance with the present disclosure can also handle narrow FOV diffusor(s), leading to less illumination power. This can lead to less power consumption, less noise, less heat, and easier thermal design.

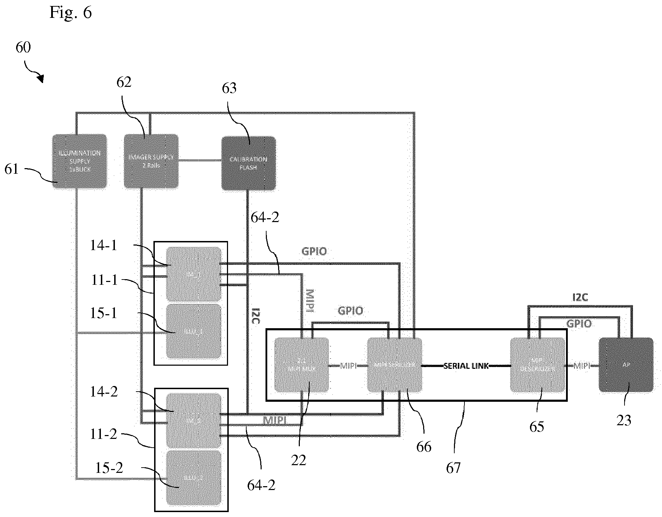

A block diagram 60 of another example of a 3D imaging apparatus using a first and a second ToF camera 11-1, 11-2 with overlapping FoVs is shown in **Fig. 6****.**

The example illustrated in Fig. 6 comprises a first ToF camera 11-1 and a second ToF camera 11-2. An image sensor 14-1 of the first ToF camera 11-1 and an image sensor 14-2 of the second ToF camera 11-2 as well as a calibration flash 63 are coupled to an imager power supply 62 and can communicate via an I2C (inter IC) interface. Calibration flash 63 can be utilized for a calibration of the 3D imaging apparatus 60. The calibration can remove errors related to distance measurements (depth calibration). Respective illumination sources (e.g. VCSEL) 15-1, 15-2 are powered by an illumination power supply 61. The 3D imaging apparatus 60 further comprises a data interface 67 between the ToF camera 11-1, 11-2 and application processor 23. In the illustrated example, data interface 67 comprises multiplexer 22, a MIPI (Mobile Industry Processor Interface Alliance) serializer 66, and a MIPI deserializer 65. The latter two are coupled to each other via a serial link and can provide precise multi-camera sensor clock and sensor synchronization. The data interface 67 provides data communication between the ToF cameras 11-1, 11-2 and application processor 23.

The image sensors 14-1, 14-2 are coupled to the multiplexer 22 via respective MIPI interfaces 64-2 for transferring respective image data from image sensors 14-1, 14-2 to the multiplexer 22. The multiplexer 22 is coupled to MIPI serializer 66 also via a MIPI interface. MIPI serializer 66 can provide control signals to the image sensors 14-1, 14-2 and multiplexer 22 via respective GPIO interfaces (General-Purpose Input/Output), e.g. for interleaved image capturing.

While MIPI serializer 66 can receive and transmit the image data in a fashion similar to Fig. 3, the MIPI deserializer 65 can reverse the operations of MIPI serializer 66 and indicate first image data from image sensor 14-1 and second image data from image sensor 14-2 to the application processor 23 via GPIO and I2C interfaces. The application processor 23 can then perform further digital signal processing on the image data, for example to perform gesture recognition from image data corresponding to the overlapping area 14.

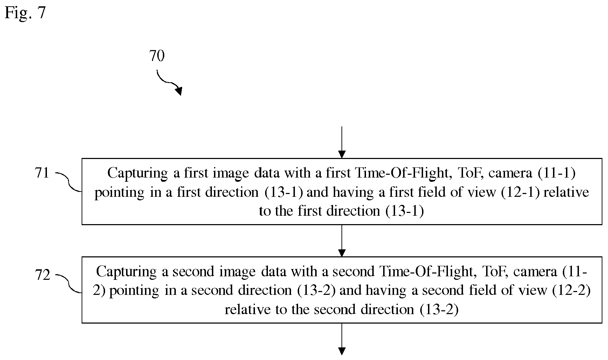

The skilled person having benefit from the present disclosure will appreciate that embodiments of the present disclosure can be used for carrying out a 3D imaging method 70 illustrated in **Fig. 7****.**

The 3D imaging method 70 includes capturing 71 first image data with a first ToF camera 11-1 which points in a first direction 13-1 and has a first field of view 12-1 relative to the first direction 13-1. Method 70 further includes capturing 62 second image data with a second ToF camera 11-2 which points in a second direction 13-2 and has a second field of view 12-2 relative to the second direction 13-2. In accordance with embodiments of the present disclosure the second field of view 12-2 overlaps the first field of view 12-1.

To summarize, embodiments of the present disclosure rely on using two ToF camera frontends, each with a narrow FoV. When operating together, the overlapping FoV of each ToF camera form a system which offers an ultra-wide FOV (see Fig. 4, left), but providing two individual point clouds with sufficient resolution. As a result, the delivered data can be of much higher quality. As described, each ToF camera frontend looks at a part of the scenery and their FoVs overlap. The ToF camera frontend may operate sequentially, which allows for a reduced framerate and as such leads to low power consumption on each camera frontend, enabling better thermal performance, but delivers a point cloud at doubled framerate in the overlapping area 14, where the high framerates are required. Because each camera frontend has a standard/narrow FoV, aspects of the camera design may be simplified - the lens, the optical IR band-pass filter, the VCSEL diffuser, and the calibration

The aspects and features mentioned and described together with one or more of the previously detailed examples and figures, may as well be combined with one or more of the other examples in order to replace a like feature of the other example or in order to additionally introduce the feature to the other example.

Examples may further be or relate to a computer program having a program code for performing one or more of the above methods, when the computer program is executed on a computer or processor. Steps, operations or processes of various above-described methods may be performed by programmed computers or processors. Examples may also cover program storage devices such as digital data storage media, which are machine, processor or computer readable and encode machine-executable, processor-executable or computer-executable programs of instructions. The instructions perform or cause performing some or all of the acts of the above-described methods. The program storage devices may comprise or be, for instance, digital memories, magnetic storage media such as magnetic disks and magnetic tapes, hard drives, or optically readable digital data storage media. Further examples may also cover computers, processors or control units programmed to perform the acts of the above-described methods or (field) programmable logic arrays ((F)PLAs) or (field) programmable gate arrays ((F)PGAs), programmed to perform the acts of the above-described methods.

The description and drawings merely illustrate the principles of the disclosure. Furthermore, all examples recited herein are principally intended expressly to be only for illustrative purposes to aid the reader in understanding the principles of the disclosure and the concepts contributed by the inventor(s) to furthering the art. All statements herein reciting principles, aspects, and examples of the disclosure, as well as specific examples thereof, are intended to encompass equivalents thereof.

A functional block denoted as "means for ..." performing a certain function may refer to a circuit that is configured to perform a certain function. Hence, a "means for s.th." may be implemented as a "means configured to or suited for s.th.", such as a device or a circuit configured to or suited for the respective task.

Functions of various elements shown in the figures, including any functional blocks labeled as "means", "means for providing a signal", "means for generating a signal.", etc., may be implemented in the form of dedicated hardware, such as "a signal provider", "a signal processing unit", "a processor", "a controller", etc. as well as hardware capable of executing software in association with appropriate software. When provided by a processor, the functions may be provided by a single dedicated processor, by a single shared processor, or by a plurality of individual processors, some of which or all of which may be shared. However, the term "processor" or "controller" is by far not limited to hardware exclusively capable of executing software, but may include digital signal processor (DSP) hardware, network processor, application specific integrated circuit (ASIC), field programmable gate array (FPGA), read only memory (ROM) for storing software, random access memory (RAM), and nonvolatile storage. Other hardware, conventional and/or custom, may also be included.

A block diagram may, for instance, illustrate a high-level circuit diagram implementing the principles of the disclosure. Similarly, a flow chart, a flow diagram, a state transition diagram, a pseudo code, and the like may represent various processes, operations or steps, which may, for instance, be substantially represented in computer readable medium and so executed by a computer or processor, whether or not such computer or processor is explicitly shown. Methods disclosed in the specification or in the claims may be implemented by a device having means for performing each of the respective acts of these methods.

It is to be understood that the disclosure of multiple acts, processes, operations, steps or functions disclosed in the specification or claims may not be construed as to be within the specific order, unless explicitly or implicitly stated otherwise, for instance for technical reasons. Therefore, the disclosure of multiple acts or functions will not limit these to a particular order unless such acts or functions are not interchangeable for technical reasons. Furthermore, in some examples a single act, function, process, operation or step may include or may be broken into multiple sub-acts, -functions, -processes, -operations or -steps, respectively. Such sub acts may be included and part of the disclosure of this single act unless explicitly excluded.

Furthermore, the following claims are hereby incorporated into the detailed description, where each claim may stand on its own as a separate example. While each claim may stand on its own as a separate example, it is to be noted that - although a dependent claim may refer in the claims to a specific combination with one or more other claims - other examples may also include a combination of the dependent claim with the subject matter of each other dependent or independent claim. Such combinations are explicitly proposed herein unless it is stated that a specific combination is not intended. Furthermore, it is intended to include also features of a claim to any other independent claim even if this claim is not directly made dependent to the independent claim.

## Claims

1. A 3D imaging apparatus (10), comprising:
a first Time-Of-Flight, ToF, camera (11-1) pointing in a first direction (13-1) and having a first field of view (12-1) relative to the first direction (13-1); and
a second ToF camera (11-2) pointing in a second direction (13-2) and having a second field of view (12-2) relative to the second direction, the second field of view (12-2) overlapping the first field of view (12-1).

2. The 3D imaging apparatus (10) of claim 1, further comprising:
a control circuit configured to control an image acquisition of the first (11-1) and the second ToF camera (11-2) in an interleaved manner.

3. The 3D imaging apparatus (10) of claim 1 or 2, further comprising:
a multiplexer (22) configured to multiplex a first image data signal of the first ToF camera (11-1) and a second image data signal of the second ToF camera (11-2).

4. The 3D imaging apparatus (10) of any one of the previous claims, wherein
the first ToF camera (11-1) is configured to capture first image data (31) at a first frame rate,
the second ToF (11-2) camera is configured to capture second image data (32) at a second frame rate,
wherein the 3D imaging apparatus (10) is configured to provide image data corresponding to an overlapping area (14) of the first (12-1) and second field of view (12-2) at a frame rate, which is larger than the first and the second frame rate.

5. The 3D imaging apparatus (10) of any one of the previous claims, wherein an overall field of view (12-3) of the 3D imaging apparatus spanned by the first (12-1) and the second field of view (12-2) is at least 130°.

6. The 3D imaging apparatus (10) of any one of the previous claims, wherein the first (13-1) and the second direction (13-2) span a horizontal plane.

7. The 3D imaging apparatus (10) of any one of the previous claims, wherein the first (13-1) and the second direction (13-2) are pointing away from each other.

8. The 3D imaging apparatus (10) of any one of claims 1 to 6, wherein the first (13-1) and the second direction (13-2) are pointing towards each other.

9. The 3D imaging apparatus (10) of any one of the previous claims, wherein the 3D imaging apparatus (10) is configured to vary an overlapping area (14) of the first (12-1) and second field of view (12-2) by varying the first (13-1) and/or the second direction (13-2).

10. The 3D imaging apparatus (10) of any one of the previous claims, wherein an overlapping area (14) of the first (12-1) and second field of view (12-2) is at most 50% of the first (12-1) or second field of view (12-2).

11. A vehicle comprising a 3D imaging apparatus (10) according to any one of the previous claims.

12. A 3D imaging method, comprising:
capturing first image data (31) with a first Time-Of-Flight, ToF, camera (11-1) pointing in a first direction (13-1) and having a first field of view (12-1) relative to the first direction (13-1); and
capturing second image data (32) with a second ToF camera (11-2) pointing in a second direction (13-2) and having a second field of view (12-2) relative to the second direction (13-2), the second field of view (12-2) overlapping the first field of view (12-1).

13. The 3D imaging method of claim 12, wherein the first image data (31) and the second image data (32) are captured in an interleaved manner.

14. The 3D imaging method of claim 12 or 13, further comprising multiplexing the first image data (31) and the second image data (31).

15. Sensing a vehicle's interior or exterior using the method of any one of claims 12 to 14.
